# EUROPÄISCHE PATENTANMELDUNG

(11) **EP 1 004 481 A2**
(43) Veröffentlichungstag der Anmeldung: **31.05.2000**
(21) Anmeldenummer: 99120960.2
(22) Anmeldetag: 03.11.1999
(51) Int. Cl.: B60R 21/20

(54) **Insassenschutzvorrichtung für ein Kraftfahrzeug**

(30) Priorität: 28.11.1998 DE 19855075
(71) Anmelder: Volkswagen Aktiengesellschaft, 38436 Wolfsburg (DE)
(72) Erfinder: Wohllebe, Thomas, Dipl.-Ing., 38110 Braunschweig (DE); Sinnhuber, Ruprecht, Dipl.-Ing., 38518 Gifhorn (DE)

(57) **Zusammenfassung**

Die Erfindung betrifft eine Insassenschutzvorrichtung (1) für ein Kraftfahrzeug mit einem Airbagmodul (2), das mindestens einen zusammengefalteten Airbag (3) und einen Gasgenerator (4) enthält. Das Airbagmodul (2) ist hinter einer Wand-Austrittöffnung (5) für den sich entfaltenden Airbag (3) in einer Austrittwand angeordnet. Eine Wand-Abdeckung (7) verschließt die Wand-Austrittöffnung (5) und ist für einen Airbagaustritt zur Freigabe der Wand-Austrittöffnung (5) in eine Freigabeposition bewegbar. Erfindungsgemäß ist die Wand-Abdeckung (7) mit einem Stellelement (10) verbunden, das mittels eines pyrotechnischen, mit dem Gasgenerator (4) betätigbaren Antriebs dergestalt verstellbar ist, daß die Wand-Abdeckung (7) vor oder ggf. gleichzeitig mit der Aktivierung des Airbags (3) in eine Freigabeposition in einen Bereich hinter der Austrittwand zur Freigabe der Wand-Austrittöffnung (5) bewegbar ist.

## Beschreibung

Die Erfindung betrifft eine Insassenschutzvorrichtung für ein Kraftfahrzeug nach dem Oberbegriff des Anspruchs 1.

Bei einer gattungsgemäßen, allgemein bekannten Insassenschutzvorrichtung für ein Kraftfahrzeug ist ein Airbagmodul mit einem zusammengefalteten Airbag und einem Gasgenerator hinter einer Austrittwand mit einer Wand-Austrittöffnung angeordnet. Die Wand-Austrittöffnung ist durch eine Wand-Abdeckung abgedeckt, die beim Austritt des Airbags durch diesen in eine Freigabeposition bewegbar ist.

Dabei sind Wand-Abdeckungen in der Art von Klappen und Deckeln allgemein bekannt, die durch einen gezündeten Airbag und den sich aufbauenden Druck an vorgekerbten Randnuten eines Überzugs aufreißbar und in den Fahrzeuginnenraum hineinklappbar sind. Um unkontrollierte Flugbewegungen solcher Deckel in den Insassenraum zu verhindern sind dafür auch Fangeinrichtungen allgemein bekannt. Trotz solcher Sicherungsmaßnahmen geht von solchen Klappen oder Deckeln, die sich in den Fahrzeuginnenraum hinein bewegen, eine gewisse Aggressivität aus, die zu einer Beeinträchtung der Insassen führen kann.

Es sind bereits Wand-Abdeckungen mit reduzierter Aggressivität bekannt, die ohne eine Annäherung an einen Fahrzeuginsassen in eine Offenstellung überführbar sind:

Bei einer bekannten Anordnung mit einer Schwenkklappe oder einem Rollo als Wand-Abdeckung (DE 197 24 594 A1) sind diese in der Kontur der Austrittwand von einer Geschlossenstellung in eine Freigabeposition bewegbar, wobei als Antrieb eine beschleunigte Trägheitsmasse verwendet wird. Die Wirkung einer solcher Trägheitsmasse ist weitgehend von der Art und Geometrie des Aufpralls und dem verwendeten Gewicht abhängig, so daß die erforderliche Öffnungssicherheit nicht in allen Fällen als gegeben erscheint.

Weiter ist eine Anordnung mit einem drehbar gelagerten Airbagmodul bekannt (DE 42 17 174 C2), welches aus einer Ruhestellung, bei der eine Modul-Austrittöffnung gegenüber der Wand-Austrittöffnung verdreht ist, in eine Bereitschaftsstellung drehbar ist, bei der die Modul-Austrittöffnung mit der Wand-Austrittöffnung fluchtet. Bei der Drehung des Airbagmoduls in die Bereitschaftsstellung schwenkt ein Schwenkkörper zusammen mit dem Airbagmodul aus einer Abdeckstellung und gibt die Wand-Austrittöffnung in der Bereitschaftsstellung frei. Zusätzlich zum Gasgenerator für den Airbag wird hier als Drehantrieb eine pyrotechnisch, unabhängig vom Gasgenerator betätigbare Zylinder-Kolben-Einheit verwendet, so daß diese Anordnung relativ aufwendig ist.

Aufgabe der Erfindung ist es, eine Insassenschutzvorrichtung vorzuschlagen, mit der bei einer einfachen und kostengünstigen Herstellung eine sichere und schnelle Öffnungsfunktion gegeben ist.

Diese Aufgabe wird mit den Merkmalen des Anspruchs 1 gelöst.

Gemäß Anspruch 1 ist die Wand-Abdeckung mit einem Stellelement verbunden. Das Stellelement ist mittels eines pyrotechnischen, mit dem Gasgenerator betätigbaren Antriebs verstellbar dergestalt, daß damit die Wand-Abdeckung vor oder ggf. gleichzeitig mit der Aktivierung des Airbags in ihre Freigabeposition in einen Bereich hinter die Austrittwand zur Freigabe der Wand-Austrittöffnung bewegbar ist.

Es wird somit hier die Wand-Abdeckung in den Bereich hinter die Austrittwand bewegt, so daß davon keine Aggressivität gegenüber einem Fahrzeuginsassen ausgeht. Zudem steht durch den pyrotechnischen Antrieb eine ausreichend große Kraft für eine sichere Öffnungsbewegung der Wand-Abdeckung zur Verfügung. Die Anordnung ist dabei einfach und kostengünstig durchführbar, indem der ohnehin vorhandene Gasgenerator zur Betätigung des pyrotechnischen Antriebs mit herangezogen wird. Damit kann auch eine geeignete und angepaßte Abstimmung der zeitlichen Abfolge zwischen der Öffnung der Wand-Abdeckung und dem Aufblasvorgang für den Airbag festgelegt werden.

In einer ersten konkreten Ausführungsform ist die Wand-Abdeckung als in der Wandkontur verschiebbares, festes Rollo mit einer vorzugsweise an einer Vorkerbung aufreißbaren Außenhaut ausgebildet. Als Stellelement ist ein Zugelement als Seilzug vorgesehen, der mit dem Rollo in Zugrichtung verbunden ist. Der pyrotechnische Antrieb ist eine Zylinder-Kolben-Einheit, bei der das Zylindervolumen eine Gasverbindung mit dem Gasgenerator hat und darüber betätigbar ist. Der Seilzug ist mit dem Kolben unmittelbar oder mittelbar verbunden und damit in Rollo-Zugrichtung bis in die Rollo-Freigabeposition bewegbar.

Damit wird eine relativ feste Wand-Abdeckung möglich, die aber dennoch ohne Aggressivität für die Fahrzeuginsassen öffenbar ist, wobei durch eine durchgehende Außenhaut ein günstiges optisches Erscheinungsbild gewährleistet ist. Die Anordnung ist insgesamt kompakt und mit sicherer Funktion herstellbar.

Der Seilzug wird dabei zweckmäßig zwischen einem festen Abstützpunkt und dem Rollo ggf. über eine Umlenkung gespannt. Bei einer Kolbenaktivierung wird dann der gespannte Seilzug über ein Anlageteil ausgelenkt, wodurch das Rollo in seine Freigabeposition verschiebbar ist.

Die Betätigung der Zylinder-Kolben-Einheit durch den Gasgenerator kann einfach mittels eines Zweistufen-Gasgenerators erfolgen. Dabei wird zweckmäßig nach einer Aktivierung durch einen Crashsensor die erste Generatorstufe verwendet, um eine Kolbenverschiebung und damit eine Öffnung der Wand-Abdeckung durchzuführen. Mit der zweiten Generatorstufe ist dann zeitversetzt der Airbag aufblasbar. Die erste Generatorstufe weist dabei zweckmäßig eine Gasverbindung zum Zylindervolumen der Zylinder-Kolben-Einheit und die zweite Generatorstufe eine Gasverbindung zur Einblasöffnung des Airbags auf.

Alternativ zu dieser Art der Betätigung kann auch ein einstufiger Gasgenerator verwendet werden, wobei die Zylinder-Kolben-Einheit an einer Vorkammer angeordnet ist, an die der Airbag mit wenigstens einer Einblasöffnung angeschlossen ist. Das Zylindervolumen der Zylinder-Kolben-Einheit ist über eine Einströmöffnung im Zylinder im Bereich des eingefahrenen Kolbens mit dem Gasgenerator und mit wenigstens einer Überströmöffnung im Verschiebeweg des Kolbens mit der Vorkammer verbunder. Damit wird erreicht, daß zumindest zu Beginn einer Aktivierung der Kolben über den Gasgenerator ausschließlich verschoben und damit das Rollo zur Freigabe der Wand-Abdeckung verschoben wird. Erst nach Überfahren der wenigstens einen Überströmöffnung durch den Kolben wird eine Gasverbindung über die Vorkammer zwischen dem Gasgenerator und dem Airbag für dessen Aufblasvorgang hergestellt. Auch eine solche Anordnung ist mit einfachen Mitteln kostengünstig und funktionssicher herstellbar, wobei durch individuelle Geometrien Anpassungen und Dimensionierungen an individuelle Gegebenheiten gut möglich sind.

Die aufreißbare Außenhaut wird vorteilhaft weich ausgebildet und in einer weiteren Funktion durch das verschiebbare Rollo in eine Randabdeckposition an der Wand-Austrittöffnung als Kantenschutz gegen eine Airbagverletzung bewegbar.

In einer weiteren Ausführungsform ist die Wand-Abdeckung nicht als Rollo sondern in der Art einer festen Klappe ausgebildet. Dabei ist der Gasgenerator in einer ersten Vorkammer angeordnet, die bei dessen Aktivierung mit Gas beaufschlagt wird. An diese erste Vorkammer ist ein Zylinder einer Zylinder-Kolben-Einheit angeschlossen dergestalt, daß der Kolben bei einer Gaseinströmung etwa senkrecht von der Wand-Austrittöffnung wegbewegbar ist. Der Zylinder weist wenigstens eine, im Verschiebeweg des Kolbens angeordnete Überströmöffnung zu einer zweiten Vorkammer auf. Die zweite Vorkammer enthält eine Zug- und Schwenkwand als Außenwand, an der einerseits die Wand-Abdeckung als Klappe und andererseits der Kolben angeschlossen sind. Damit wird zumindest zu Beginn einer Aktivierung und damit einer Kolbenbewegung bis zur Freigabe der Überströmöffnung die Wand-Abdeckung etwas nach innen senkrecht zur Wand-Austrittöffnung zurückgezogen.

Die Zug- und Schwenkwand weist zudem eine, in die zweite Vorkammer ragende Schottwand auf. Diese deckt in der Grundstellung die wenigstens eine Einblasöffnung des Airbags ab. Zudem ist sie so gegenüber einem, in die zweite Vorkammer durch die Überströmöffnung einströmenden Gasstrom angestellt, daß durch diese Anströmung ein Drehmoment auf die Zug- und Schwenkwand für eine Öffenbewegung ausgeübt wird. Dadurch wird die Zug- und Schwenkwand, nachdem die Klappe bereits aus der Wand-Austrittöffnung etwas zurückgezogen ist, aufgeschwenkt (wobei ein entsprechender Freiraum vorzusehen ist). Dabei werden sowohl die Wand-Austrittöffnung als auch die Einblasöffnung des Airbags für dessen Aufblasvorgang freigegeben. Auch hier ist somit für das Öffnen der Wand-Abdeckung und für den Aufblasvorgang des Airbags nur ein Gasgenerator erforderlich.

Um sowohl die lineare Zugbewegung als auch die kreisförmige Schwenkbewegung der Zug- und Schwenkwand zu ermöglichen, wird in einer einfachen Konstruktion eine Lagerung des Kolbens in einer Langlochführung vorgeschlagen.

Auch bei dieser Ausführungsform mit der schwenkbaren Klappe kann diese für eine optisch ansprechende Innenraumgestaltung mit einer durchgehenden, vorzugsweise an einer Vorkerbung aufreißbaren Außenhaut abgedeckt sein.

Für eine kompakte Ausführung bietet sich eine zylindrische Gestalt der ersten Vorkammer an, wobei der darin enthaltene Gasgenerator zweckmäßig radial gerichtete Aufblasöffnungen aufweist.
Grundsätzlich kann die Austrittwand an allen möglichen Innenraum-Wandbereichen und Abdeckungen in der vorstehend beschriebenen Weise ausgestaltet sein. Bevorzugt ist eine solche Ausgestaltung in einer Schalttafel verwendbar.

Anhand einer Zeichnung wird die Erfindung näher erläutert.

Es zeigen:
- Fig. 1: eine schematische Darstellung einer Insassenschutzvorrichtung für ein Kraftfahrzeug,
- Fig. 2: eine schematische, vergrößerte Darstellung eines Rollos samt Außenhaut einer Insassenschutzvorrichtung für ein Kraftfahrzeug nach Fig. 1, und
- Fig. 3: eine schematische Darstellung einer weiteren Ausführungsform einer Insassenschutzvorrichtung für ein Kraftfahrzeug.

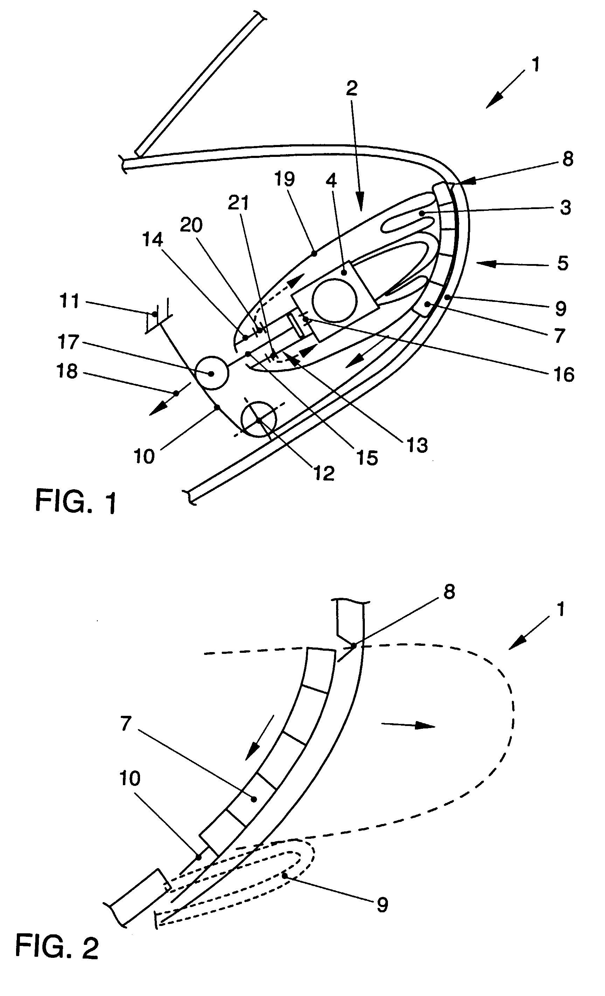

In der Fig. 1 ist schematisch eine Insassenschutzvorrichtung 1 für ein Kraftfahrzeug im Querschnitt dargestellt. Diese Insassenschutzvorrichtung 1 umfaßt ein Airbagmodul 2, das einen zusammengefalteten Airbag 3 und einen Gasgenerator 4 enthält. Das Airbagmodul 2 ist unmittelbar hinter einer Wand-Austrittöffnung 5 für den sich aufblasenden Airbag 3 in einer Schalttafel 6 angeordnet. Die Wand-Austrittöffnung 5 der Schalttafel 6 ist im normalen Fahrbetrieb von einem als Wand-Abdeckung ausgebildeten, in der Wandkontur verschiebbaren, festen Rollo 7 mit einer durchgehenden und an einer Vorkerbung 8 aufreißbaren Außenhaut 9 verschlossen.

Wie dies aus der Fig. 1 weiter ersichtlich ist, ist das Rollo 7 an einem unteren Ende mit einem freien Ende eines Seilzugs 10 verbunden. Dieser Seilzug 10 ist zwischen einem festen Abstützpunkt 11 und dem Rollo 7 über eine Umlenkung 12 gespannt.

An den Gasgenerator 4 des Airbagmoduls 2 schließt sich, wie dies in der Fig. 1 schematisch dargestellt ist, eine Zylinder-Kolben-Einheit 13 als pyrotechnischer Antrieb an, die aus einem Zylinder 14 und einem darin verschiebbaren Kolben 15 besteht. Der Zylinder 14 ist mit dem Gasgenerator 4 über eine Einströmöffnung 16 verbunden. Der Kolben 15 umfaßt weiter ein Anlageteil 17, über das der Kolben 15 am Seilzug 10 anliegt.

In einer in der Fig. 1 mit durchgezogenen Linien dargestellten ersten Ausführungsform ist der Gasgenerator 4 als ein zweistufiger Generator ausgebildet. Die erste Generatorstufe des Gasgenerators 4 wird im Crashfall über die Aktivierung durch einen Crashsensor gezündet, wodurch Gas über die Einströmöffnung 16 in den Zylinder 14 strömt und den Kolben 15 samt Anlageteil 17 in Richtung des Pfeiles 18 treibt. Dadurch wird der Seilzug 10 ausgelenkt, so daß das Rollo 7 in eine Freigabeposition verschoben wird, bei der die Wand-Austrittöffnung 5 für einen Austritt des Airbags 3 freigegeben wird.

Zeitversetzt zu der Zündung der ersten Generatorstufe wird nach der Freigabe der Wand-Austrittöffnung 5 durch Verschieben des Rollos 7 die zweite Generatorstufe des Gasgenerators 4 gezündet und der Airbag 3 über eine Gasverbindung zum Gasgenerator 4 aufgeblasen, wie dies strichliert in der Fig. 2 dargestellt ist. Während dieses Aufblasvorgangs des Airbags 3 reißt die weich ausgebildete, aufreißbare Außenhaut 9 an der Sollbruchstelle der Vorkerbung 8 ein und wird, wie dies in der Fig. 2 schematisch angedeutet ist, durch das Rollo 7 in eine Randabdeckposition an der Wand-Austrittöffnung 5 als Kantenschutz bewegt.

In einer in der Fig. 1 lediglich schematisch und teilweise strichliert eingezeichneten zweiten Ausführungsform ist der Gasgenerator 4 einstufig ausgebildet. Der Gasgenerator 4 steht hier lediglich mit der in einer Vorkammer 19 angeordneten Zylinder-Kolben-Einheit 13 in Gasverbindung. Die Gasverbindung wird über die Einströmöffnung 16 im Zylinder 14 im Bereich des eingefahrenen Kolbens 15 hergestellt. Im weiteren Verschiebeweg des Kolbens 15 sind zwei Überströmöffnungen 20, 21 ausgebildet, über die eine Gasverbindung zu der Vorkammer 19 herstellbar ist. Ansonsten ist der Aufbau der gleiche wie bei der oben beschriebenen Ausführungsform der Insassenschutzvorrichtung 1. Im Crashfall wird der Gasgenerator 4 gezündet, wodurch Gas über die Einströmöffnung 16 in den Zylinder 14 der Zylinder-Kolben-Einheit 13 einströmt und den Kolben in Richtung des Pfeils 18 treibt, wodurch der Seilzug 10 betätigt und das Rollo mit der oben beschriebenen Wirkung die Wand-Austrittöffnung 5 in der Schalttafel 6 freigibt. Im Verlauf der Verschiebung des Kolbens 15 werden die Überströmöffnungen 20, 21 im Zylinder 14 überfahren, so daß nunmehr über die Überströmöffnungen 20, 21 eine Gasverbindung zur Vorkammer 19 hergestellt ist. Aufgrund dieser Gasverbindung wird der Airbag aufgeblasen, wobei hier in entsprechender Weise wieder die Außenhaut 9 an der Vorkerbung 8 aufreißt.

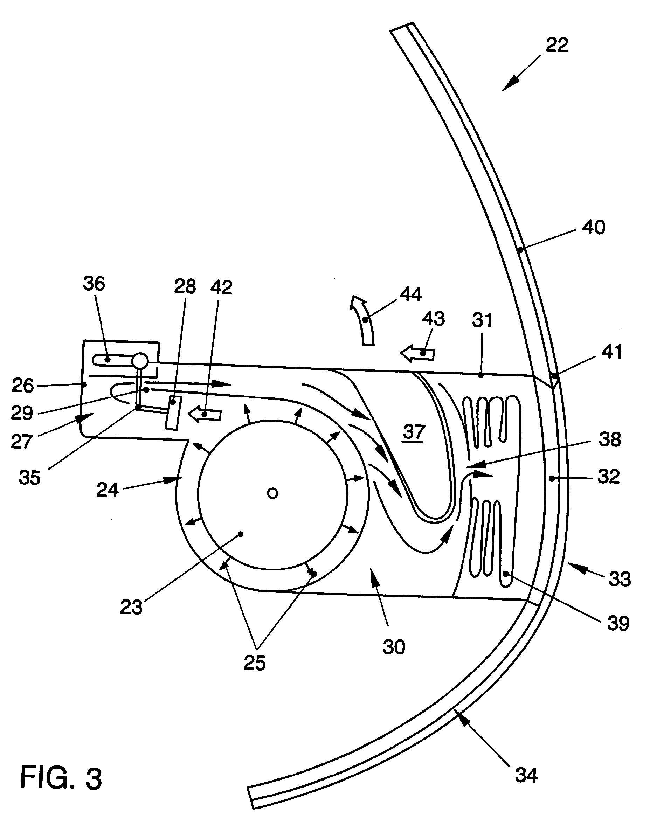

In der Fig. 3 ist eine weitere Ausführungsform einer Insassenschutzvorrichtung 22 schematisch dargestellt. Ein Gasgenerator 23 ist hier in einer ersten, zylindrisch ausgebildeten Vorkammer 24 angeordnet und weist radiale Ausblasöffnungen 25 auf. An diese erste Vorkammer 24 ist ein Zylinder 26 einer Zylinder-Kolben-Einheit 27 angeschlossen.

Ein Kolben 28 der Zylinder-Kolben-Einheit 27 ist im in der Fig. 3 dargestellten normalen Fahrbetrieb am der ersten Vorkammer 24 zugewandten Zylinderende angeordnet. Im weiteren Verlauf des Zylinders 26 ist eine Überströmöffnung 29 ausgebildet, die eine Gasverbindung zu einer zweiten Vorkammer 30 herstellt. Diese zweite Vorkammer 30 weist eine als Zug- und Schwenkwand ausgebildete Außenwand 31 auf, an der einerseits eine als Wand-Abdeckung ausgebildete Klappe 32 angeschlossen ist, die eine Wand-Austrittöffnung 33 einer Schalttafel 34 verschließt. Andererseits ist an die zweite Vorkammer 30 der Kolben 28 angeschlossen. Der Kolben 28 ist mit einer Kolbenstange 35 in einer Langlochführung 36 gelagert. Weiter weist die Außenwand 31 eine in die zweite Vorkammer 30 ragende Schottwand 37 auf, die in der in der Fig. 3 dargestellten Grundstellung des normalen Fahrbetriebs eine Einblasöffnung 38 eines zusammengefalteten Airbags 39 abdeckt.

Die Klappe 32 ist mit einer durchgehenden Außenhaut 40 abgedeckt, die eine Vorkerbung 41 aufweist.

Im Crashfall wird der Gasgenerator 23 gezündet, so daß über die radialen Ausblasöffnungen 25 Gas in die erste Vorkammer 24 strömt und den Kolben 28 der Zylinder-Kolben-Einheit 27 mit Gas beaufschlagt. Durch diese Gasbeaufschlagung wird der Kolben in Richtung des Pfeil 42 senkrecht von der Wand-Austrittöffnung 33 wegbewegt. Durch die Anbindung des Kolbens 28 an die Außenwand 31 der zweiten Vorkammer 30 wird die die Wand-Austrittöffnung 33 abdeckende Klappe 32 entsprechend dem Pfeil 43 nach innen zurückgezogen. Dieses Zurückziehen der Klappe 32 erfolgt so lange, als der Kolben 28 noch nicht die Überströmöffnung 29 im Zylinder 26 freigegeben hat. Sobald diese Überströmöffnung 29 im Verlauf der weiteren Kolbenbewegung freigegeben wird, strömt Gas über diese in die zweite Vorkammer 30 und trifft auf die Schottwand 37. Wie dies aus der Fig. 3 zu entnehmen ist, ist die Schottwand 37 in der zweiten Vorkammer 30 so angestellt, daß beim Auftreffen des Gasstroms auf die Schottwand ein Drehmoment ausgebildet wird. Dieses Drehmoment bewirkt ein Aufschwenken (Pfeil 44) der als Zug- und Schwenkwand ausgebildeten Außenwand 31 zusammen mit der daran angeschlossenen, die Wand-Abdeckung ausbildenden Klappe 32 mitsamt der Schottwand 37, wodurch die Wand-Austrittöffnung 33 freigegeben wird. Gleichzeitig mit diesem Aufschwenken wird die Einblasöffung 38 des Airbags 39 für den Aufblasvorgang freigegeben. Im weiteren Verlauf des Aufblasens des Airbags 39 reißt die Außenhaut 40 an der Vorkerbung 41 ein.

### BEZUGSZEICHENLISTE

- 1: Insassenschutzvorrichtung
- 2: Airbagmodul
- 3: Airbag
- 4: Gasgenerator
- 5: Wand-Austrittöffnung
- 6: Schalttafel
- 7: Rollo
- 8: Vorkerbung
- 9: Außenhaut
- 10: Seilzug
- 11: fester Abstützpunkt
- 12: Umlenkung
- 13: Zylinder-Kolben-Einheit
- 14: Zylinder
- 15: Kolben
- 16: Einströmöffnung
- 17: Anlageteil
- 18: Pfeil
- 19: Vorkammer
- 20: Überströmöffnung
- 21: Überströmöffnung
- 22: Insassenschutzvorrichtung
- 23: Gasgenerator
- 24: erste Vorkammer
- 25: radiale Ausblasöffnung
- 26: Zylinder
- 27: Zylinder-Kolben-Einheit
- 28: Kolben
- 29: Überströmöffnung
- 30: zweite Vorkammer
- 31: Außenwand
- 32: Klappe
- 33: Wand-Austrittöffnung
- 34: Schalttafel
- 35: Kolbenstange
- 36: Langlochführung
- 37: Schottwand
- 38: Einblasöffnung
- 39: Airbag
- 40: Außenhaut
- 41: Vorkerbung
- 42: Pfeil
- 43: Pfeil
- 44: Pfeil

## Patentansprüche

1. Insassenschutzvorrichtung für ein Kraftfahrzeug,
mit einem Airbagmodul, das mindestens einen zusammengefalteten Airbag und einen Gasgenerator enthält,
mit einer Wand-Austrittöffnung für den sich entfaltenden Airbag in einer Austrittwand, insbesondere einer Schalttafel des Fahrzeugs, hinter der das Airbagmodul angeordnet ist, und
mit einer Wand-Abdeckung der Wand-Austrittöffnung, die für einen Airbagaustritt zur Freigabe der Wand-Austrittöffnung in eine Freigabeposition bewegbar ist,
**dadurch gekennzeichnet**
daß die Wand-Abdeckung (7; 32) mit einem Stellelement (10; 31) verbunden ist, und
daß das Stellelement (10; 31) mittels eines pyrotechnischen, mit dem Gasgenerator (4; 23) betätigbaren Antriebs verstellbar ist dergestalt, daß damit die Wand-Abdeckung (7; 32) vor oder gegebenenfalls gleichzeitig mit der Aktivierung des Airbags (3; 39) in ihre Freigabeposition in einen Bereich hinter die Austrittwand zur Freigabe der Wand-Austrittöffnung (5; 33) bewegbar ist.

2. Insassenschutzvorrichtung nach Anspruch 1, **dadurch gekennzeichnet**
daß die Wand-Abdeckung als in der Wandkontur verschiebares, festes Rollo (7) mit einer durchgehenden, vorzugsweise an einer Vorkerbung (8) aufreißbaren Außenhaut (9) ausgebildet ist,
daß das Stellelement ein Zugelement als Seilzug (10) ist, der mit dem Rollo (7) in Zugrichtung verbunden ist,
daß der pyrotechnische Antrieb eine Zylinder-Kolben-Einheit (13) ist, bei der das Zylindervolumen eine Gasverbindung mit dem Gasgenerator (4) hat, wobei der Seilzug (10) mit dem Kolben (15) unmittelbar oder mittelbar verbunden und in Rollo-Zugrichtung bis in die Freigabeposition bewegbar ist.

3. Insassenschutzvorrichtung nach Anspruch 2, **dadurch gekennzeichnet** daß der Seilzug (10) zwischen einem festen Abstützpunkt (11) und dem Rollo (7) gegebenenfalls über eine Umlenkung (12) gespannt ist und der Kolben (15) mit einem Anlageteil (17) am Seilzug (10) anliegt und diesen bei einer Kolbenbetätigung auslenkt, so daß das Rollo (7) in seine Freigabeposition verschiebbar ist.

4. Insassenschutzvorrichtung nach einem der Ansprüche 1 bis 3, **dadurch gekennzeichnet** daß der Gasgenerator (4) ein Zweistufen-Gasgenerator ist, wobei nach Aktivierung durch einen Crashsensor mit der ersten Generatorstufe der pyrotechnische Antrieb betätigbar ist und zeitversetzt mit der zweiten Generatorstufe der Airbag (3) aufblasbar ist.

5. Insassenschutzvorrichtung nach Anspruch 2, **dadurch gekennzeichnet**
daß die Zylinder-Kolben-Einheit (13) in einer Vorkammer (19) angeordnet ist, an die der Airbag (3) mit wenigstens einer Einblasöffnung angeschlossen ist, und
daß das Zylindervolumen über eine Einströmöffnung (16) im Zylinder (14) im Bereich des eingefahrenen Kolbens (15) mit dem Gasgenerator (4) und mit wenigstens einer Überströmöffnung (20, 21) im Verschiebeweg des Kolbens (15) mit der Vorkammer (19) verbunden ist, so daß zu Beginn einer Kolbenbetätigung das Rollo (7) zur Freigabe der Wand-Austrittöffnung (5) verschiebbar ist und nach Überfahren der wenigstens einen Überströmöffnung (20, 21) durch den Kolben eine Gasverbindung über die Vorkammer (19) zwischen dem Gasgenerator (4) und dem Airbag (3) für den Aufblasvorgang hergestellt ist.

6. Insassenschutzvorrichtung nach einem der Ansprüche 2 bis 3, **dadurch gekennzeichnet,** daß die aufreißbare Außenhaut (9) weich ausgebildet ist und durch das verschiebbare Rollo (7) in eine Randabdeckposition an der Wand-Austrittöffnung (5) bewegbar ist.

7. Insassenschutzvorrichtung nach Anspruch 1, **dadurch gekennzeichnet**
daß der Gasgenerator (23) in einer ersten Vorkammer (24) angeordnet ist, die bei dessen Aktivierung mit Gas beaufschlagbar ist,
daß an die erste Vorkammer (24) ein Zylinder (26) einer Zylinder-Kolben-Einheit (27) angeschlossen ist dergestalt, daß der Kolben (28) etwa senkrecht von der Wand-Austrittöffnung (33) wegbewegbar ist,
daß der Zylinder (26) wenigstens eine im Verschiebeweg des Kolbens (28) angeordnete Überströmöffnung (29) zu einer zweiten Vorkammer (30) aufweist,
daß die zweite Vorkammer (30) eine Zug- und Schwenkwand als Außenwand (31) aufweist, an der einerseits die Wand-Abdeckung als feste Klappe (32) und andererseits der Kolben (28) angeschlossen sind, so daß zumindest zu Beginn einer Kolbenbewegung bis zur Freigabe der Überströmöffnung (29) die Wand-Abdeckung als Klappe (32) etwas nach innen senkrecht zur Wand-Austrittöffnung (33) zurückziehbar ist,
daß die Zug- und Schwenkwand (31) eine in die zweite Vorkammer (30) ragende Schottwand (37) aufweist, die in der Grundstellung sowohl eine Einblasöffnung (38) des Airbags (39) abdeckt als auch so gegenüber einem in die zweite Vorkammer (30) nach dem Rückzug der Klappe (32) einströmenden Gasstrom angestellt ist, daß ein Drehmoment für ein Aufschwenken der Zug- und Schwenkwand (31) mit der angeschlossenen Klappe (32) und/oder Schottwand (37) zur Freigabe der Wand-Austrittöffnung (33) und der Einblasöffnung (38) des Airbags (39) für den Aufblasvorgang aufbringbar ist.

8. Insassenschutzvorrichtung nach Anspruch 7, **dadurch gekennzeichnet,** daß der Kolben (28) mit einer Kolbenstange (35) in einer Langlochführung (36) gelagert ist, wobei die Lagerung auch als Schwenklager ausgebildet ist.

9. Insassenschutzvorrichtung nach Anspruch 7 oder Anspruch 8, **dadurch gekennzeichnet,** daß die Klappe (32) mit einer durchgehenden, vorzugsweise an einer Vorkerbung (41) aufreißbaren Außenhaut (40) abgedeckt ist.

10. Insassenschutzvorrichtung nach einem der Ansprüche 7 bis 9, **dadurch gekennzeichnet,** daß die erste Vorkammer (24) zylindrisch ausgebildet ist und der darin angebrachte Gasgenerator (23) radiale Ausblasöffnungen (25) aufweist.
